# EUROPEAN PATENT APPLICATION

(11) **EP 4 015 314 A1**
(43) Date of publication of application: **22.06.2022**
(21) Application number: 20215270.8
(22) Date of filing: 18.12.2020
(51) Int. Cl.: B60R 19/18

(54) **CRASH EXTENSION FOR CRASH MANAGEMENT SYSTEM**

(71) Applicant: Constellium Singen GmbH, 78224 Singen (DE)
(72) Inventor: LANGE, Christian, 8224 Löhningen (CH); KLEINDICK, Tim, 78224 SINGEN (DE); BRAECKOW, Ralph, 78224 SINGEN (DE)
(74) Representative: Constellium - Propriété Industrielle

(57) **Abstract**

A crash management system (1) for a vehicle having a longitudinal direction X a transverse direction Y perpendicular to the longitudinal direction X and a vertical direction Z perpendicular to the plane defined by said directions X and Y, comprising a bumper cross member (2) globally oriented in said transverse direction Y, at least a longitudinal member arrangement (5), at least a crash extension (6) attached to at least one of the ends of said bumper cross member (2) and extending over a predetermined length (a) behind said bumper cross member in the longitudinal direction wherein said crash extension (6) is a hollow profile having at least one chamber (61, 62, 63) and having at least one flange (60) attached on said bumper cross member (2), wherein said flange (60) bends in the event of a deformation of the end portion of said bumper cross member (2) following a collision of the vehicle, in particular a collision with small overlap.

## Description

### FIELD OF THE INVENTION

The invention relates to a crash management system comprising a crash extension that is subjected to bend in the event of a deformation of the end portion of the bumper cross member following a collision of the vehicle, in particular a collision with small overlap.

### BACKGROUND

A common motor vehicle comprises a body structure which intends to create a frame able to resist to impacts. In particular, the body structure comprises a left longitudinal support and a right longitudinal support, on the front end of which a crash management system is disposed. Left and right longitudinal support are also called left and right longitudinal beams or left and right side rails.

The term crash management system is generally used to describe the structural module consisting of the bumper cross member and the related attachments which connect the bumper cross member to the left and right side rails of the vehicle. The main goal of a crash management system is to prevent damages following a choc between a vehicle and an obstacle or between two vehicles.

The crash management system should be able to absorb energy at the start of a collision and to guide the remaining crash forces into the rest of the body structure.

A common crash management system includes a bumper cross member, typically extending laterally across the front or rear end of a vehicle, and absorbers also called shock absorbers or deformation elements. Such absorber is interposed between said bumper cross member and the forward portion of the vehicle frame and/or body structure. The absorber is therefore both a member by which the bumper cross member is fixed to the front structure of the vehicle and a deformable member designed to absorb a certain amount of kinetic energy transferred from the bumper cross member in the event of an impact. The absorber is intended to plastically deform under compression by crumpling, or buckling in order to absorb the crash energy.

In order to insure the safety of passengers, vehicles are subjected to a wide variety of tests and evaluations. Such tests are usually mandated by government regulations and insurance certifications. Concerning the vehicle resistance to an impact, several crash tests may be performed with different speeds and also different overlapping of the parties implied in the impact over one another. For example, a small overlap frontal impact corresponds to a 25% overlapping of the width of the vehicle over the other party in the impact.

During small overlap impact, the vehicles outer edges are primarily affected. As these areas are not well protected by structure elements such as absorbers, they are particularly weakened.

WO2016/026893 describes a motor vehicle body arrangement having a longitudinal member arrangement, a bumper crossmember and a supporting element. The supporting element is fastened to the end portion of the bumper crossmember. The supporting element is designed and arranged in such a manner that, in the event of deformation of the end portion of the bumper crossmember as a consequence of a frontal collision of the motor vehicle, in particular a frontal collision with small overlap, the supporting element supports the end portion on the longitudinal member arrangement. Here, that is to say by means of the support, further deformation of the end portion in the direction of the longitudinal member arrangement is inhibited. The support element aims to introduce forces optimally into the longitudinal member arrangement and therefore must have strength and rigidity.

US 8 733 823 discloses a bumper system for a motor vehicle including a bumper cross member which is arranged transversely to a travel direction and has two attachment zones for connection to two side rails arranged in parallel relationship to the travel direction. The bumper cross member has a center portion extending between the attachment zones and two end zones to close off the bumper cross member to vehicle sides. A deformation element is arranged behind each of the end zones and constructed to support in the event of a head-on collision with slight overlap the end zone which undergoes a buckling as a result of the head-on collision. At least one belt element at least partly surrounds a circumference of the deformation element and is secured to at least one of the side rails. Two elements are necessary to absorb the impact energy while avoiding the vehicle to be too much damaged and protecting the passengers. The deformation element is connected to the attachments zones that may impact the deformation of this part in case of a larger frontal impact.

US 8454080 discloses a motor vehicle including a frame with energy-absorbing zones at outboard corners of the vehicle and a bumper cross member mounted to the energy-absorbing zones to transfer force to at least one of the energy-absorbing zones during a collision. The bumper cross member includes a center section extending generally laterally across the vehicle between the energy-absorbing zones, and left and right load transfer sections attached to outboard ends of the center section. Each load transfer section extends outboard and rearward such that the free end of each load transfer section is disposed outboard of the frame adjacent a rear end of its respective energy-absorbing zone. In a small-overlap collision, the load transfer section on the side of the impact bends rearward as the energy-absorbing zone deforms, and the free end of the load transfer section contacts the frame to transfer crash loads to the frame. The load transfer is first supposed to have strength to transfer energy instead of be deformed to absorb energy.

There is a need to propose a crash management system for small overlap impact, more particularly for small overlap frontal impact, able to absorb energy of impact by deformation while avoiding fracture during the impact and high damages.

### SUMMARY OF THE INVENTION

The present invention proposes a solution to enhance the ability of a crash management system to absorb impact energy and to generate a resistance to limit the damage of the vehicle side and secure the passengers.

The present invention relates to a crash management system comprising a bumper cross member, at least a longitudinal member arrangement and at least one crash extension. The crash extension of the invention is fastened to the end portion of the bumper cross member, extending the bumper cross member outwardly and behind its inner face.

### DESCRIPTION OF THE INVENTION

In case of small overlap impact, not the whole bumper cross member but only a small portion engages the other object, so that much less of the vehicle crash energy is able to be absorbed by the bumper cross member and the absorbers. Furthermore, the majority of loading due to the impact occurs outside of the major longitudinal support structures of the vehicle. If this outside part is not properly designed, there is a danger that the object having caused the impact penetrates deeply in the region of the wheel and further damage the interior of the vehicle.

Designing a crash management system performing well in this type of small overlap crash is difficult, particularly since a crash management system must also be effective in other types of crashes. One solution may be to reinforce the vehicle body, or structure. However, such a solution increases the weight and material, which is undesirable in terms of cost and fuel consumption. Another solution may be to reinforce the outside part of the crash management system, but the reinforcement may not impact the ability of the system to absorb the energy of an impact occurring with more overlapping in-between the absorbers. In addition, the reinforcement may not be too large since the volume available in this area of the vehicle is limited.

The problem to be solved by the invention is to propose a crash management system whose end sides are able to absorb the energy of impact by deformation while avoiding fracture during the impact, and able to give the resistance necessary for the vehicle to escape on the side.

The solution proposed by the invention is a crash management system having a longitudinal direction X a transverse direction Y perpendicular to the longitudinal direction X and a vertical direction Z perpendicular to the plane defined by said directions X and Y, comprising
a bumper cross member globally oriented in said transverse direction Y,
at least a longitudinal member arrangement
at least a crash extension attached to at least one of the ends of the bumper cross member and extending over a predetermined length (a) behind said bumper cross member in the longitudinal direction,
characterized in that,
said crash extension is a hollow profile having at least one chamber and having at least one flange attached to the bumper cross member, wherein said flange bends in the event of a deformation of the end portion of said bumper cross member following a collision of the vehicle, in particular a collision with small overlap.

In the description, the X, Y and Z axis corresponds to the local referential of the vehicle. X corresponds to the longitudinal direction of the vehicle, Y the transverse direction, perpendicular to X, and Z the vertical direction to the plane defined by the X and Y directions.

According to the invention, the crash management system comprises a bumper cross member, at least a longitudinal member arrangement and at least a crash extension. Preferably the crash management system of the invention is attached to the front side of a vehicle, nevertheless the crash management system of the invention may also be attached to the rear side of the vehicle.

The bumper cross member of the crash management system of the invention is globally oriented in the transverse direction Y. The terms globally oriented mean that the bumper cross member may be slightly curved to meet the design of the car, but the general direction of the bumper cross member follows the transverse direction Y. The bumper cross member of the invention has an outer face and an inner face. The outer face is facing the outside of the vehicle and the inner face is facing the inside of the vehicle and is joined to the longitudinal member arrangement.

A crash management system according to the invention, is linked to the frame or body structure of the vehicle by the right and left side rails (or longitudinal beams), that are arranged parallel to the longitudinal direction X. According to the invention, a longitudinal member arrangement may be defined as comprising the different elements joining the bumper cross member to the side rails and therefore to the body structure of the vehicle. Typically, the longitudinal member arrangement according to the invention comprises the elements positioned between the bumper cross member and the side rails. A longitudinal member arrangement according to the invention may comprise absorbers, connecting plates of the absorbers to the side rails, or other elements. In a particular embodiment of the invention, a spacer placed between a connecting plate of the absorber and the side rails may be part of the longitudinal member arrangement.

A crash extension of the crash management system of the invention is attached to at least one of the ends of the bumper cross member. According to the invention, the crash extension extends over a predetermined length (a) behind the bumper cross member in the longitudinal direction, adapted to the type of vehicle. The crash extension of the invention is a hollow profile having at least one chamber on one side and having at least one flange on the other side. This crash extension is attached on the flange side to the bumper cross member and permit to extend the crash management system outwardly. This flange may bend in the event of a deformation of the end portion of the bumper cross member following a collision of the vehicle, in particular a collision with small overlap. This bending effect permits to have a good deformability, allowing the crash extension to be deformed and to absorb the energy of impact instead of transferring it to the rest of the body structure.

According to the invention, the length (a) is predetermined according to two parameters, the level of energy to be absorbed by the crash extension in case of impact and the space available at that location on the vehicle. These two parameters depend on the type of vehicle in which the crash extension has to be implemented. In a preferred embodiment, the length (a) is determined in such a way that, in case of impact, the crash extension does not come to rest on the side rails.

In one embodiment, the crash extension is attached to the outer face of the bumper cross member and preferably the length (a) does not exceed the sum of the length of the longitudinal member arrangement and the thickness of the bumper cross member taken in the same axis in the longitudinal direction X,

In another embodiment, the crash extension is attached to the inner face of the bumper cross member and preferably the length (a) does not exceed the length of the longitudinal member arrangement taken in the longitudinal direction X,

In another embodiment the crash extension is attached in the bumper cross member.

According to the invention, the crash extension is designed in such a way that it deforms in cooperation with the longitudinal member arrangement in the event of a deformation of the end portion of the bumper cross member following a collision of the vehicle, in particular a collision with small overlap. The crash extension of the invention preferably deforms increasingly according to an increasing force level in the transverse direction Y in the event of a deformation of the end portion of the bumper cross member following a collision of the vehicle, in particular a collision with small overlap. During the collision, the flange of the crash extension attached to the bumper cross member will first bend, then the crash extension will be pushed in the direction of the inside of the vehicle, the crash extension will then get in contact with the longitudinal member arrangement and will continue its deformation, without breaking or fracture, and the vehicle will escape in the Y direction to avoid high damages of the inside of the vehicle. If the rigidity of the crash extension is too high, it will not be able to bend or deform, which will not allow sufficient energy to be absorbed.

The deformation process of the crash extension allows part of the impact energy to be absorbed by the crash extension and not transmitted to the body structure or the wheel. The high force level undergone by the crash extension gives the resistance necessary for the vehicle to escape on the side and minimize the force transmission through the wheels and the body structure of the vehicle.

In a one embodiment of the invention the crash extension is an extruded hollow profile. In a preferred embodiment, the crash extension of the invention is an extruded hollow profile, whose extrusion direction is substantially parallel to the vertical direction Z. The extrusion direction parallel to the vertical direction Z permits to increase the possibilities of geometries and to adapt the crash extension to the type of vehicle. Additionally, having an extruded connecting element, whose extrusion direction is parallel to the vertical direction Z, allows to define all the needed geometry. Furthermore, the geometry of the connecting element is limited only by the extrusion ability of the element

The hollow profile of the invention may have one or several chambers. In one embodiment of the invention the crash extension is a hollow profile having at least two chambers or even at least three chambers. In the specific embodiment where the crash extension has several chambers, the walls, or wall in case of a crash extension with two chambers, separating the chambers are designed to absorb efficiently part of the impact energy without breaking or fracture. Preferably the walls separating the chambers are oriented to bend during the deformation of the crash extension.

According to the invention, the crash extension is attached by one flange to the bumper cross member, preferably, the flange of the crash extension of the invention is attached to the outer face of the bumper cross member.

Preferably, the flange of the crash extension of the invention is attached by welding, screwing, bonding, or riveting. In a preferred embodiment, the crash extension is attached by welding, most preferably by MIG Welding. In a most preferred embodiment the flange is welded on all of its edges in contact with the bumper cross member.

In one embodiment of the invention the crash extension is made of aluminium alloy. Preferably the crash extension of the invention is made of an aluminium alloy with good crash properties. In a most preferred embodiment the crash extension of the invention is made of aluminium alloy from the AA6XXX-series aluminium alloy. According to the invention, "AA6xxx-series aluminium alloy" designates any 6xxx aluminium alloy listed in "International Alloy Designations and Chemical Composition Limits for Wrought Aluminium and Wrought Aluminium Alloys" published by The Aluminium Association, Inc.

In an embodiment the crash extension has at least one chamber with walls of different thicknesses.

In one embodiment the crash extension of the extension is a hollow profile with a height h. Preferably the height h of the crash extension of the invention is smaller than the height H of the bumper cross member outer face in the vertical direction Z, on which the crash extension is attached by its flange. In the embodiment where the height of the crash extension is smaller than the height H of the bumper cross member outer face, the crash extension may be centred or not according to the height of the bumper cross member outer face.

### DESCRIPTION OF THE DRAWING:

Figure 1 is a bird's eye view of one crash management system according to the invention
Figure 2 is a front view of one crash management system according to the invention
Figure 3 is a top view of one side of the figure 1
Figure 4 is a representation of one embodiment of the crash extension of the invention List of references:
   1: Crash management system
   2: Bumper cross member
   3: Absorber
   4: Fixing plate
   5: Longitudinal member arrangement
   6: Crash extension
   7: longitudinal side rail
   11: outer face of the bumper cross member
   12: inner face of the bumper cross member
   60: Flange of the crash extension
   61: Hollow chamber of the crash extension
   62: Hollow chamber of the crash extension
   63: Hollow chamber of the crash extension
   64: Wall of the crash extension
   65: Wall of the crash extension
   66: Wall of the crash extension
   67: Wall of the crash extension
   68: Outer face of the crash extension 6
   69: Inner face of the crash extension 6
   80: Welding seam
   E: extrusion direction
   a: predetermined length of extension of the crash extension 6
   H: Height of the outer face of the bumper cross member
   h: Height of the crash extension

### DETAILED DESCRIPTION OF THE INVENTION

Throughout all the figures, same or corresponding elements may generally be indicated by same reference numerals. These depicted embodiments are to be understood as illustrative of the invention and not as limiting in any way.

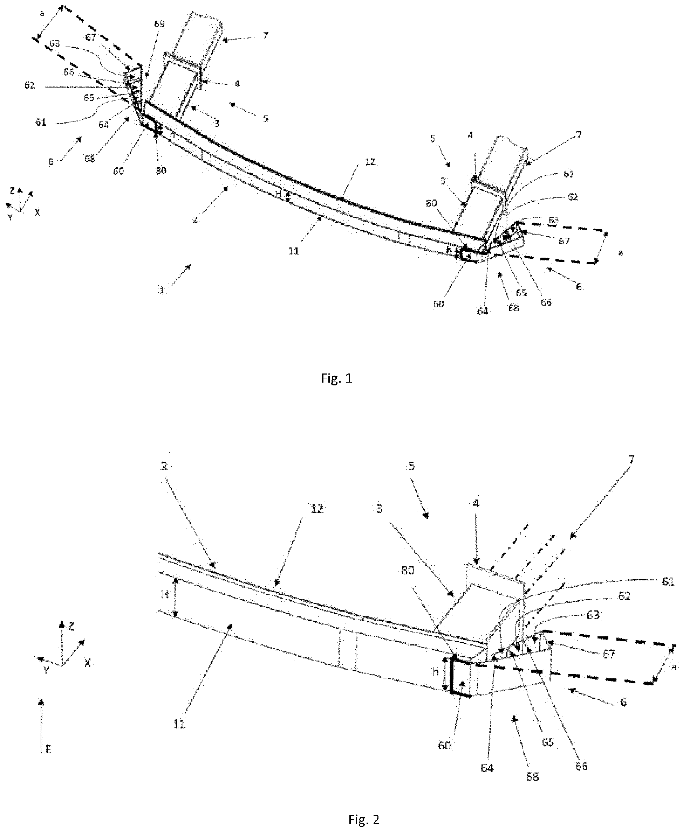

Figure 1 represents a bird's eye view front view of a crash management system 1 according to one embodiment of the invention connected to a longitudinal side rail 7. The crash management system 1 comprises a bumper cross member 2 on each side of which are positioned longitudinal member arrangements 5, and crash extensions 6.

The bumper cross member 2 is globally oriented along the transverse axis Y perpendicular to the longitudinal direction X. The bumper cross member 2 is slightly curved. The bumper cross member 2 has one outer face 11 and one inner face 12. The outer face 11 faces the outside of the vehicle (not shown) and the inner face 12 faces the inside of the vehicle (not shown). The outer face 11 has a height H in the vertical direction Z.

On each side of the bumper cross member 2 near the end side, is attached a longitudinal member arrangement 5, which comprises one absorber 3 on which a fixing plate 4 is joined to fix the absorber 3 to the longitudinal side rail 7.

The absorber 3 is attached on one of its end to the inner face 12 of the bumper cross member 2 and on the other end to the longitudinal side rail 7 of the vehicle frame, using the conventional fixing plate 4. A second crash box 3 is attached symmetrically on the other end side of the bumper cross member 2 in a similar manner as the first crash box 3.

Two crash extensions 6 are attached to each end of the bumper cross member 2. A C-shape welding seam 80 shows one mean of attachment of the crash extension 6 to the outer side 11 of the bumper cross member 2. The crash extension 6 has a flange 60 and three hollow chambers 61, 62 and 63, with partition walls 65 and 66 and exterior walls 64 and 67. The crash extension has an outer face 68 facing the outside of the vehicle and an inner face 69 facing the inner side of the vehicle.

One side of the flange 60 serves as an attachment mean of the crash extension 6 on the outer face 11 of the bumper cross member 2. The flange 60 is curved to extend the crash extension 6 in the longitudinal direction X over a predetermined length a behind inner face of the bumper cross member 2.

The flange 60 has a height h on the side attached to outer face 11 of the bumper cross member 2. The height h is smaller than the height H of the cross member beam outer face 11.

In a symmetrical manner, on the other side of the cross bumper beam 2 is a longitudinal member arrangement 5, which comprises one absorber 3 on which a fixing plate 4 is joined to fix the absorber 3 on the longitudinal side rail 7, and a crash extension 6.

Figure 2 represents only one side of the crash management system of figure 1. The other side may be essentially symmetrically the same except that it may comprise a towing eye.

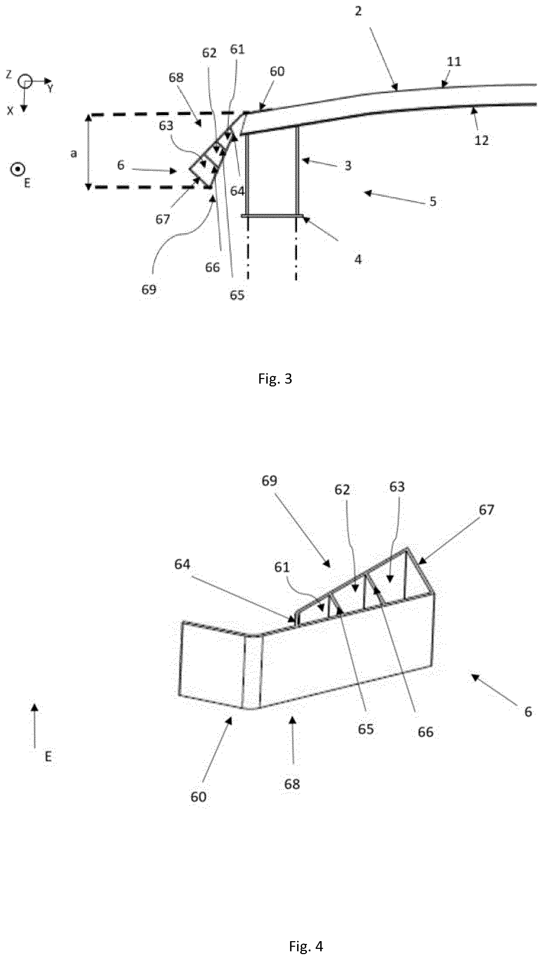

Figure 3 represents a top view of one side of the crash management system shown in figure 1. The shown part of crash management system 1 is composed by one end side of the bumper cross member 2, longitudinal member arrangement 5, and crash extension 6.

An absorber 3 is attached on one of its end to the inner face 12 of the bumper cross member 2 and on the other end to the longitudinal side rails 7 of the vehicle frame (in dotted line), using conventional fixing plate 4.

The crash extension 6 is attached to one of the ends of the bumper cross member 2. The crash extension 6 is an extruded hollow profile whose extrusion direction E is parallel to the vertical direction Z. The crash extension 6 has a flange 60, 3 hollow chambers 61, 62 and 63, with partition walls 65 and 66 and exterior walls 64 and 67. The crash extension has an outer face 68 facing the outside of the vehicle and an inner face 69 facing the inner side of the vehicle. The length (a) of the cash extension 6 does not exceed the sum of the length of the absorber 5 added to the thickness of the bumper cross member 2.

Figure 4 represents more precisely the crash extension 6 shown in figures 1, 2 and 3. The crash extension 6 has a flange 60, 3 hollow chambers 61, 62 and 63, with partition walls 65 and 66 and exterior walls 64 and 67. The crash extension has an outer face 68 and an inner face 69. When the crash extension is attached to the bumper cross member the outer face 68 is facing the outer side of the vehicle and the inner face 69 the inner side of the vehicle.

The flange 60 serves as attachment means of the crash extension 6 on the bumper cross member 2. The flange 60 is curved to extend the crash extension 6 in the longitudinal direction X over a predetermined length a behind the bumper cross member 2. The length of the flange 60 permits to the flange 60 to bend in case of an impact in particular a collision with small overlap.

## Claims

1. Crash management system (1) for a vehicle having a longitudinal direction X a transverse direction Y perpendicular to the longitudinal direction X and a vertical direction Z perpendicular to the plane defined by said directions X and Y, comprising
a bumper cross member (2) globally oriented in said transverse direction Y,
at least a longitudinal member arrangement (5)
at least a crash extension (6) attached to at least one of the ends of said bumper cross member (2) and extending over a predetermined length (a) behind said bumper cross member in the longitudinal direction
**characterized in that**
said crash extension (6) is a hollow profile having at least one chamber (61, 62, 63) and having at least one flange (60) attached on said bumper cross member (2), wherein said flange (60) bends in the event of a deformation of the end portion of said bumper cross member (2) following a collision of the vehicle, in particular a collision with small overlap.

2. Crash management system (1) according to claim 1, wherein said crash extension (6) is designed in such a way that it deforms in cooperation with said longitudinal member arrangement (5) in the event of a deformation of the end portion of said bumper cross member (2) following a collision of the vehicle, in particular a collision with small overlap.

3. Crash management system (1) according to any one of claims 1 to 2, wherein said crash extension (6) deforms increasingly according to an increasing force level in transverse direction y in the event of a deformation of the end portion of said bumper cross-member (2) following a collision of the vehicle, in particular a collision with small overlap.

4. Crash management system (1) according to any one of claims 1 to 3, wherein said crash extension (6) is an extruded hollow profile.

5. Crash management system (1) according to claim 4, wherein the extrusion direction (E) of said extruded hollow profile is substantially parallel to said vertical direction z.

6. Crash management system (1) according to any one of claims 1 to 5, wherein said crash extension (6) is a hollow profile having at least two chambers (61, 62, 63).

7. Crash management system (1) according to any one of claims 1 to 6, wherein said flange (60) of said crash extension (6) is attached on the outer face (11) of said bumper cross member (2).

8. Crash management system (1) according to any one of claims 1 to 7, wherein said flange (60) of said crash extension (6) is attached by welding, screwing, bonding, or riveting.

9. Crash management system (1) according to any one of claims 1 to 8, wherein said crash extension (6) is made of aluminium alloy.

10. Crash management system (1) according to any one of claims 1 to 9, wherein said crash extension (6) is made of an aluminium alloy with good crash properties.

11. Crash management system (1) according to any one of claims 1 to 10, wherein said crash extension (6) is made of aluminium alloy from the AA6XXX-series aluminium alloy.

12. Crash management system (1) according to any one of claims 1 to 11, wherein said crash extension (6) has at least one chamber with walls (64 to 69) of different thicknesses

13. Crash management system according (1) to any one of claims 1 to 12 wherein said crash extension (6) has a height (h) wherein said height (h) of said crash extension (6) is smaller than the height (H) of said bumper cross member (2) on which said crash extension (6) is attached.
